# EUROPÄISCHE PATENTSCHRIFT

(11) **EP 0 918 600 B1**
(45) Veröffentlichungstag und Bekanntmachung des Hinweises auf die Patenterteilung: **17.01.2001**
(21) Anmeldenummer: 97934479.3
(22) Anmeldetag: 17.07.1997
(51) Int. Cl.: B27D 5/00, B27N 7/00

(54) **VERFAHREN ZUR VERGÜTUNG VON OBERFLÄCHEN**
SURFACE IMPROVING PROCESS
PROCEDE POUR AMELIORER DES SURFACES

(30) Priorität: 26.07.1996 DE 19630270
(43) Veröffentlichungstag der Anmeldung: 02.06.1999
(73) Patentinhaber: Henkel Kommanditgesellschaft auf Aktien, 40589 Düsseldorf-Holthausen (DE); Dorus Klebetechnik GmbH & Co. KG, 73441 Bopfingen (DE)
(72) Erfinder: HASENKAMP, Rainer, D-73441 Bopfingen (DE); THIELE, Lothar, D-40764 Langenfeld (DE)
(86) Internationale Anmeldenummer: EP9703832
(87) Internationale Veröffentlichungsnummer: WO9804390

(56) Entgegenhaltungen:
- EP-A- 0 744 260
- WO-A-84/04262
- AU-B- 549 776
- DE-A- 1 937 847
- DE-A- 2 233 322
- DE-A- 19 543 901
- US-A- 3 907 624
- US-A- 5 085 891
- US-A- 5 308 657
- US-A- 5 436 069

## Beschreibung

Die Erfindung betrifft ein Verfahren und eine Vorrichtung zur Vergütung von Oberflächen von Holzwerkstoffen, vorzugsweise von unebenen schmalen Oberflächen.

In der Möbelindustrie werden solche Oberflächen-Behandlungsverfahren in großem Umfang eingesetzt. Üblicherweise werden die dort verwendeten Holzwerkstoffe nämlich nicht in ihrem ursprünglichen Aussehen belassen, sondern erhalten eine veredelnde Oberflächenbeschichtung. Zumeist handelt es sich dabei um eine Melaminbeschichtung. Furniere, dekorative Schichtstoffe oder Dekorfolien werden daneben als Beschichtungsmaterial benutzt.

Die Beschichtung von Seitenflächen, Kanten oder allgemein von schmalen Flächen erfolgt häufig durch ein spezielles Kantenmaterial. Beispielsweise handelt es sich hierbei um einen Umleimer oder ein sogenanntes Schmalflächenband, das mittels eines Klebstoffes auf die Schmalflächen aufgebracht wird. Dieses Verfahren wird allgemein als Kantenanleimung bezeichnet.

Es besteht jedoch häufig der Wunsch, die schmalen Flächen beziehungsweise Kanten aus ästhetischen Gründen abzurunden beziehungsweise aus funktionellen Gründen profilierte Flächen vorzusehen. Bei der Beschichtung solcher weichen "Konturen" werden neben der zuvor beschriebenen Kantenanleimung, die auch als Softforming-Verfahren bezeichnet wird, weitere Beschichtungsverfahren eingesetzt.

Ein Grund für den Wunsch nach einer Vergütung ist, daß die zu beschichtenden Oberflächen häufig große Unebenheiten, Lunkerstellen etc. aufweisen. Dies gilt insbesondere für Spanplatten.

Eine derartige Oberflächenbeschaffenheit führt bei der Beschichtung nach einem der angegebenen Verfahren zu einer auffallend unruhigen, "buckeligen", oder welligen Materialoberfläche, die das Aussehen, beispielsweise des späteren Möbelstückes, beeinträchtigt. Um eine Verbesserung herbeizuführen, werden häufig dickere Kanten- beziehungsweise Beschichtungsmaterialien benutzt, die in ausreichendem Maße die Unebenheiten der Oberfläche ausgleichen können und ein Durchscheinen (Telegraphieren ) des Untergrunds der Oberfläche vermeiden. Mit dem Anstieg der Materialdicke ist jedoch auch eine Vergrößerung der Rückstellkraft des gebogenen Beschichtungsmaterials verbunden. Dies erfordert wiederum eine verlängerte Andruckstrecke zur Verklebung eines solchen steiferen Bechichtungsmaterials. Im übrigen sind solche dickeren Beschichtungsmaterialien in der Regel teurer.

Besser ist ein in der DE 44 42 397 beschriebenes Verfahren beziehungsweise eine Vorrichtung zur Behandlung von Oberflächen, insbesondere von schmalen Flächen, wobei ein formbares Beschichtungsmaterial aufgetragen und mittels eines Glättebandes geglättet wird. Doch auch hier werden nicht für alle Fälle ausreichend glatte Oberflächen erzielt.

Die Aufgabe der vorliegenden Erfindung besteht deshalb darin, eine Möglichkeit anzugeben, mit der die zuvor genannten Nachteile beseitigt werden und eine Behandlung zur Glättung von Oberflächen auf einfache Weise möglich ist.

Diese Aufgabe wird durch ein Verfahren gelöst, das die in Anspruch 1 genannten Schritte umfaßt.

Das Beschichtungsmaterial wird z. B. mit einer Walze, einer verstellbaren Breitschlitzdüse oder einem Transferband aufgetragen, und zwar vorzugsweise auf das Kantenband (Umleimer). Aber ein Auftrag auf den Holzwerkstoff ist ebenfalls möglich. Vorzugsweise wird es mittels eines Transferbandes auf die Oberfläche aufgebracht. Dabei ergibt sich der Vorteil, daß für den Auftrag des Materials keine an das Profil der zu beschichtenden Oberfläche angepaßte Auftragwalze notwendig ist. Insbesondere bei einer Vielzahl von verschiedenen Kantenprofilen ist die Anfertigung solcher an die Profile angepaßter Auftragswalzen oder auch speziell angepaßter Auftragsdüsen zeitraubend und äußerst kostspielig. Überdies können verschiedene Profile nicht in kurzer Zeit beschichtet werden.
Vorzugsweise wird der Auftrag des Beschichtungsmaterials auf die zu behandelnde Oberfläche duch Druckkraft bewerkstelligt. Eine geeignete Druckvorrichtung beaufschlagt das Band auf der nicht beschichteten Seite mit einer Kraft, die das Andrücken der beschichteten Transferbandseite an die zu beschichtende Fläche bewirkt.
Eine Verbesserung des Materialauftrags wird durch zusätzliche Wärmebehandlung des Beschichtungsmaterials bzw. des Holzwerkstoffes erzielt. Vorzugsweise werden dafür Infrarotstrahler, Heizluftgebläse, Hochfrequenzstrahler oder ähnliches eingesetzt.
In einer bevorzugten Weiterbildung des Verfahrens beziehungsweise der Vorrichtung wird das Beschichtungsmaterial unmittelbar vor dem Auftrag auf die zu beschichtende Oberfläche auf das Transferband aufgebracht. Der Auftrag erfolgt dabei vorzugsweise über eine entsprechende Auftragwalze oder eine Auftragsdüse, die das Material in einer einzustellenden Materialdicke auf das Transferband bringt. Bei der Bestimmung der Materialdicke ist es vorteilhaft, diese im mittleren Bereich des Transferbandes zu erhöhen. Wie bereits beschrieben, sind insbesondere in diesem Bereich der zu beschichtenden Oberfläche die Unebenheiten am größten, so daß dort folglich mehr Material eingesetzt werden muß.
In einer weiteren vorteilhaften Ausbildung der Erfindung wird das Transferband von der zu behandelnden Oberfläche abgezogen, wobei das Material zuvor in die Poren der zu behandelnden Oberfläche eingedrungen und erstarrt bzw. ausgehärtet ist, so daß dieses beim Abziehen des Transferbands nicht daran kleben bleibt.
In vorteilhafter Ausgestaltung der Erfindung wird das abgezogene Transferband wieder zu dem Auftragssystem zurückgeführt, so daß die Verwendung eines Endlosbandes möglich ist.
Vorzugsweise wird das Transferband auch als Glätteband benutzt, so daß auf Glättungswalzen beziehungsweise auf glättende Gleitschuhe verzichtet werden kann.

Eine Glättung bzw. Modellierung ist aber auch auf andere bekannte Art und Weise möglich, z. B. mit Walzen und Rakeln bzw. Schleifen nach dem Aufsprühen.

Weitere Einzelheiten zum Auftrag und zur Glättung können der einschlägigen Literatur entnommen werden, insbesondere der DE 44 42 397, auf die ausdrücklich Bezug genommen wird.

Es können sowohl bei Raumtemperatur feste als auch nicht feste, z.B. thixotrope pastöse oder dickflüssige Beschichtungsmaterialien verwendet werden.

Wenn auf eine einfache Verarbeitung Wert gelegt wird und nicht auf die besonderen Gebrauchseigenschaften eines Duromeren, dann sind thermoplastische Materialien zur Beschichtung zweckmäßig. Einerseits verbinden sie sich gut mit der Oberfläche und andererseits sind sie leicht formbar beziehungsweise glättbar.

Um zum Auftrag des thermoplastischen Beschichtungsmaterials handelsübliche Hotmelt-Auftragsgeräte verwenden zu können, sollte das thermoplastische Material beim Auftrag ausreichend fließfähig sein. Eine gute Fließfähigkeit des Materials ist insofern wichtig, als es dadurch das Transferband besser benetzen kann, besser auf die zu beschichtende Schmalfläche auftragbar ist und darüber hinaus besser in die Poren der Spanplatte eindringen kann. Um ein zu starkes Eindringen zu vermeiden, wird die der Schmalseite abgewandte Seite der Beschichtung beziehungsweise des Transportbandes gekühlt, beispielsweise mittels einer Kaltluftdusche oder einer Kühlwalze. Damit erstarrt der das Transportband berührende Teil der Beschichtungsmasse sehr rasch, so daß weniger in die Oberfläche "absackt". Dieser Effekt kann durch Schaumbildung verstärkt werden.

Außerdem kann mit reaktiven nichtthermoplastischen Materialien beschichtet werden. Als Beispiele seien konkret genannt: 1-komponentige oder 2-komponentige Systeme auf der Basis von Polyurethanen, Polyestern, Poly(Meth)acrylaten und Epoxiden.
Sie können Zusätze enthalten, z.B. Füllstoffe, Farbpigmente, Farbstoffe, Thixotropiermittel, Katalysatoren und Stabilisatoren. Bei Zusatz von Farbpigmenten oder Farbstoffen können gleich dekorative Kanten erhalten werden.

Beim Einsatz von reaktiven Beschichtungsmassen müssen Temperaturen vermieden werden, bei denen sie in den Misch- und Dosiergeräten oder beim Auftragen und Glätten durch Vernetzung aushärten.

Das Beschichtungsmaterial soll des weiteren klebefreudig sein, das heißt, daß es zu der gleichzeitig oder in einem späteren Verfahren aufgebrachten Dekorschicht eine hohe Affinität besitzt.

Der Holzwerkstoff enthält ein Treibmittel, welches unter Einwirkung des beheizten Metallschuhes Gase bildet, so daß Poren entstehen. Dabei kann es sich im einfachsten Fall um leicht flüchtige Substanzen handeln, z.B. um Wasser, niedrigviskose Kohlenwasserstoffe oder Halogenkohlenwasserstoffe. Es kann aber auch ein Stoff sein, der sich unter Gasbildung zersetzt, z.B. N,N'-Azobisisobutyronitril, Toluol-4-sulfonylsemicarbazid, 4,4'-Oxy-bis(benzolsulfonhydrazid) oder Azodicarbonsäurediamid.

Diese porenbildenden Gase können aber auch bei der Aushärtungsreaktion der reaktiven Beschichtungsmasse entstehen, z.B. CO₂ bei der Reaktion von Isocyanaten mit Wasser. Die Aushärtungstemperatur und die Aushärtungszeit richtet sich ganz nach den Verarbeitungsprozessen und den verwendeten Beschichtungsmaterialien. In der Regel liegen die Temperaturen im Bereich von 50 bis 250°C, insbesondere von 80°C bis 180°C und die Kontaktzeiten im Bereich von 1 bis 300, insbesondere von 2 bis 20 Sekunden. Damit ist also der Vorteil verbunden, daß der Holzwerkstoff kontinuierlich verarbeitet werden kann und allenfalls kurze Haltestopps erforderlich sind, je nach der Schichtdicke des Beschichtungsmaterials.

Das erforderliche Heizaggregat kann aus einem großen Metallblock (Heizschuh) bestehen, der z.B. mit einer Heizpatrone auf die erforderliche Temperatur erwärmt wird. Vorteilhaft ist es, statt eines großen mehrere kleine Heizschuhe einzusetzen, die sich auf wechselnde konturierte Kantenoberflächen variabel anpassen lassen. Der Metallblock kann so geformt sein, daß er gleichzeitig glättet (Heizschuh). Wird die auszuhärtende Glättemasse mit dem Transferband an eine konturierte Spanplattenkante angebracht, so muß der Heizschuh so geformt bzw. die Schar der kleinen Heizschuhe so angebracht sein, daß das flexible Transferband an die Kante konturgetreu oder mit einer sonst gewünschten Form angepreßt wird. Wichtig ist es, ein flexibles Transferband einzusetzen, das der hohen Erwärmung bei Dauergebrauch standhält und die Wärme an die zu härtende Glättungsmasse weiterleitet. Beim praktischen Einsatz zeigte sich, daß z.B. Glasfaser- oder Kevlarverstärkte, teflonisierte Bänder geeignet sind (bis 260 °C einsetzbar). Auch ein dünnes teflonisiertes Stahlband kann verwendet werden.

Des weiteren stellte sich bei den bisherigen Versuchen heraus, daß die Spanplatte mit ihrem spezifischen Schichtaufbau insofern Probleme bereitet, daß zwar die Verankerung und damit die Haftung der Glättemasse im porösen Mittelteil gut ist, eine ausreichende Haftung in den höher verdichteten Randbereichen dagegen nur mit niedrigviskosen Glättemassen zu erzielen ist. Hier hat sich gezeigt, daß eine Anrauhung der Randzonen zu einem besseren, zufriedenstellenden Ergebnis führt. Eine maschinelle Anrauhung ist ohne größeren Aufwand in einer Durchlaufmaschine mit marktgängigen Werkzeugen durchführbar.

Das beschriebene Beschichtungsverfahren ist insbesondere für Holzwerkstoffe, wie Massivholz, Spanplatten, Tischlerplatten, Stäbchenplatten oder Sperrholz einsetzbar. Es kann jedoch auch bei unebenen Kunststoffmaterialien oder Metallen eine Beschichtung mit Hilfe des beschriebenen Verfahrens vorgenommen werden.

Neben der Glättung von Oberflächen bietet das Beschichtungsmaterial auch Schutz vor mechanischer Beanspruchung. Es können beispielsweise Metallschienen an den Kanten von Betonschalungsbrettern durch eine Beschichtung mit einem Material ersetzt werden, das zu einem Duroplasten aushärtet. Selbstverständlich sind auch andere Anwendungsgebiete denkbar.

So kann auf die geglättete Schmalfläche - vorzugsweise gleichzeitig mit dem Aushärten - eine Dekorschicht kaschiert werden. Als Dekorschicht können verwendet werden: Kanten aus PVC, ABS, PP oder Holz (Furnier). Sie können ein- oder mehrschichtig sein (Laminat-Kanten). Insbesondere wird harzimprägniertes Papier verwendet.

Wenn z.B. ein zweikomponentiges Polyurethan-System auf das dekorative Kantenmaterial aufgebracht und dieses klebstoffbeschichtete Kantenband auf eine gerade oder konturierte Spanplattenkante aufgeklebt wird, dann kann die Aushärtung zu einem Duroplasten mittels eines Heizschuhs überraschenderweise so beschleunigt werden, daß die Aushärtung unmittelbar nach Verlassen der Heizvorrichtung für die Folgearbeiten (Fräsen, Kappen) ausreichend weit fortgeschritten ist. Vorteilhafterweise wird man das Polyurethan-System so formulieren, daß es schnell genug ausreagiert, aber nicht bereits im Mischkopf zu störenden Aushärtungsreaktionen führt. Durch die nachträgliche Erwärmung mit dem Heizschuh läßt sich somit in-line ein Kantenband auf die Spanplattenkante aufkleben. Da der PUR-Klebstoff zu einem Duroplasten aushärtet, weist die Verklebung eine sehr hohe Wärmestand- und Wasserfestigkeit auf, wie sie z.B. für Küchen- und Badmöbel gefordert wird. Für einen Fachmann war nicht zu erwarten, daß durch die Kombination eines schnell aushärtenden, aber trotzdem leicht verarbeitbaren, reaktiven Beschichtungsmaterials mit einem beheizten Heizschuh eine dermaßen schnelle maschinelle Verklebung erreicht wird, die die kurz darauf erfolgenden Nachfolgearbeiten wie Fräsen und Kappen des Kantenüberstandes und somit einen kontinuierlichen Fertigungsprozeß zuläßt. Die Verklebung führt außerdem zu einer erstaunlich dichten Fuge.

Das erfindungsgemäße Verfahren betrifft nicht nur die Oberflächenvergütung eines Werkstückes aus Holzwerkstoff in Form einer Kantenleimung an geraden Kanten und im Softforming-Verfahren (geschweifte Kanten), sondern auch in Form des Postforming-Verfahrens, der Profilummantelung und der 3D-Ummantelung.

Zur Erläuterung dieser drei Verfahren sei gesagt: Wird bei einer länglichen Holzwerkstoff-Platte eine der beiden Vollflächen und zumindest eine der beiden Längskanten, die irgendwie abgerundet ist, mit ein und demselben Beschichtungsmaterial, vorzugsweise dekorativem Schichtstoff wie CPL oder HPL, laminiert, so spricht man von dem Postforming-Verfahren. Sind nicht nur die beiden Längskanten, sondern eventuell auch die Oberfläche eines langen, schmalen Holzwerkstoffes profiliert und wird dieses Profil-Werkstück mit einem dekorativen Beschichtungsmaterial kaschiert, so handelt es sich bei diesem Verfahren um die Profilummantelung. Bei der sogenannten 3D-Ummantelung (3D = dreidimensional), häufig auch Thermoforming-Prozeß genannt, wird Furnier oder eine Thermoplastfolie, mehrheitlich aus PVC, in Thermoforming-Pressen mit und ohne Membrane auf ein Holzwerkstoff-Paneel kaschiert, das an allen vier Seiten und eventuell auch an der flächigen Oberfläche dekorativ profiliert ist.

Werkstücke aus einem Holzwerkstoff mit einer unebenen Oberfläche können im Anschluß an die Glättung (speziell der rauhen, porösen Seiten gemäß dem beschriebenen Verfahren) bei den oben genannten Verfahren eingesetzt werden.

Bei allen genannten Verfahren ist es aber auch möglich, daß die Glättung und das Kaschieren mit einem dekorativen Beschichtungsmaterial gleichzeitig vorgenommen werden. Dies zeigt Beispiel 4 für die Kantenanleimung.

Die Erfindung wird im einzelnen durch folgende Beispiele erläutert:

### I Ausgangsmaterialien

1. Bei dem Reaktionsklebstoff 1 handelt es sich um ein einkomponentiges Polyurethan auf der Basis von MDI und Polypropylenglykol.
2. Bei dem Reaktionsklebstoff 2 handelt es sich um ein zweikomponentiges Polyurethan auf der Basis von Roh-MDI und Rizinusöl mit CaCO₃-Füllstoff.
3. Bei dem Reaktionsklebstoff 3 handelt es sich um ein Zweikomponentensystem aus einem Bisphenol-A-Diepoxid und einem Amin-Härter mit einem Beschleuniger.
4. Bei dem Reaktionsklebstoff 4 handelt es sich um einen zweikomponentigen Polyesterklebstoff aus einem ungesättigten Polyester und Benzoylperoxid, Dimethyl-p-toluidin sowie Cobaltoctoat.
5. Bei dem Reaktionsklebstoff 5 handelt es sich um einen zweikomponentigen Methacrylatklebstoff aus Polyurethandimethacrylat und Benzoylperoxid.

Mit den obigen Glättungmassen wurden folgende Versuche durchgeführt:

### Beispiel 1:

Auf die gerundete Kante einer 19-mm-Spanplatte mit Softformingprofil (Rundprofil mit Radius 20 mm) wird eine Raupe der Glättungsmasse (s. unterstehende Tabelle 1) mittig aufgetragen. Die Menge ist so bemessen, daß nach dem anschließenden Pressen die Kantenfläche vollständig bedeckt ist.

Die mit der Glättungsmasse versehene Kante wird gegen eine beheizte Metallschiene gedrück, deren Oberflächen der gerundeten Spanplattenkantenfläche angepaßt ist. Um ein Verkleben mit der Metallschiene zu verhindern, wird als Zwischenlage Silikonpapier verwendet. Die Oberflächentemperatur der beheizten Metallschiene: siehe Tabelle 1.
Nach der in der Tabelle 1 angegebenen Kontaktzeit wird das Spanplattenteil entlastet und kurz gegen eine kalte Metallschiene mit gleicher Rundung zur schnelleren Abkühlung gedrückt.
Die Glättungsmasse ist bei allen aufgeführten Klebstoffsystemen ausgehärtet. Der entstandene Randwulst läßt sich rückstandsfrei mittels einer Rasierklinge ablösen.

**Tabelle 1**

| Glättungsmasse | Temperatur der Metallschiene | Kontaktzeit | Ergebnis |
|---|---|---|---|
| Reaktionsklebstoff 1 | 150 °C | 10 sec | harte, völlig glatte Oberfläche |
| Reaktionsklebstoff 2 | 150 °C | 4 - 5 sec | harte, völlig glatte Oberfläche |
| Reaktionsklebstoff 3 | 150 °C | 15 sec | harte, völlig glatte Oberfläche |
| Reaktionsklebstoff 4 | | | harte, völlig glatte Oberfläche |
| Reaktionsklebstoff 5 | | | harte, völlig glatte Oberfläche |

### Beispiel 2:

Auf ein in Tabelle 2 aufgeführtes flexibles Material, das eine klebstoffabweisende Beschichtung aufweist, wird als Glättungsmasse der 2-K-PUR-Klebstoff flächig aufgetragen. Die Menge ist so bemessen, daß nach dem anschließenden Pressen die Kantenfläche vollständig bedeckt ist.

Das mit der Glättungsmassed versehene Material wird gegen die Oberfläche der gerundeten Spanplattenkantenfläche (wie im Beispiel 1 beschrieben) gedrückt und mittels beheizter Metallschiene (analog Beispiel 1) ausgehärtet. Die Oberflächentemperatur der beheizten Metallschiene: siehe Tabelle 2.
Nach der in der Tabelle 2 angegebenen Kontaktzeit wird das Spanplattenteil entlastet und kurz gegen eine kalte Metallschiene mit gleicher Rundung zur schnelleren Abkühlung gedrückt.

Das flexible Material kann rückstandfrei von der ausgehärteten Spanplattenkante abgezogen werden.

**Tabelle 2**

| Trägermaterial | Glättungsmasse | Temperatur der Metallschiene | Kontakt-Zeit | Ergebnis |
|---|---|---|---|---|
| Silikonpapier | Reaktionsklebstoff 1 | 150 °C | 10 sec | harte, völlig glatte Oberfläche |
| Silikonpapier | Reaktionsklebstoff 2 | 150 °C | 4-5 sec | harte, völlig glatte Oberfläche |
| teflonisiertes Kevlargewebe | Reaktionsklebstoff 2 | 150 °C | 7 sec | harte, völlig glatte Oberfläche |
| teflonisiertes Stahlband (0,05 mm) | Reaktionsklebstoff 2 | 150 °C | 3 sec | harte, völlig glatte Oberfläche |

### Beispiel 3:

Auf die gerundete Kante einer 19-mm-Spanplatte mit Softformingprofil (Rundprofil mit Radius 20 mm) wird eine Raupe der eingefärbten Glättungsmasse (s. untenstehende Tabelle 3) mittig aufgetragen. Die Menge ist so bemessen, daß nach dem anschließenden Pressen die Kantenfläche vollständig bedeckt ist.

Die mit der eingefärbten Glättungsmasse versehene Kante wird gegen eine beheizte Metallschiene gedruckt, deren Oberfläche der gerundeten Spanplattenkantenfläche angepaßt ist. Um ein Verkleben mit der Metallschiene zu verhindern, wird als Zwischenlage Silikonpapier verwendet. Die Oberflächentemperatur der beheizten Metallschiene: siehe Tabelle 3.
Nach der in der Tabelle 3 angegebenen Kontaktzeit wird das Spanplattenteil entlastet und kurz gegen eine kalte Metallschiene mit gleicher Rundung zur schnelleren Abkühlung gedrückt.
Die Glättungsmasse ist bei allen aufgeführten Klebstoffsystemen ausgehärtet und weist eine gleichmäßig farbige Oberfläche auf. Der entstandene Randwulst läßt sich rückstandsfrei mittels einer Rasierklinge ablösen.

**Tabelle 3**

| Glättungsmasse | Temperatur der Metallschiene | Kontakt-Zeit | Ergebnis |
|---|---|---|---|
| Reaktionsklebstoff 1 | 150 °C | 10 sec | Harte, völlig glatte, weiße Oberfläche |
| Reaktionsklebstoff 2 | 150 °C | 15 sec | Harte, völlig glatte, blaue Oberfläche |
| 2-K-Epoxidklebstoff 3 mit 5 % Titandioxid | 150 °C | 4 sec | Harte, völlig glatte, weiße Oberfläche |

### Beispiel 4 (Kantenanleimung):

Auf 0,6 mm starkes Eichefurnier bzw. eine in Tabelle 4 aufgeführten Folie (Papier- oder Kunststoff-Basis) wird der Klebstoff flächig aufgetragen.
Das mit dem Klebstoff versehene Material wird gegen die Oberfläche der gerundeten Spanplattenkantenfläche (wie im Beispiel 1 beschrieben) gedrückt und mittels beheizter Metallschiene (analog Beispiel 1) ausgehärtet. Die Oberflächentemperatur der beheizten Metallschiene: siehe Tabelle 4. Nach der in der Tabelle 4 angegebenen Kontaktzeit wird das Spanplattenteil entlastet und kurz gegen eine kalte Metallschiene mit gleicher Rundung zur schnelleren Abkühlung gedruckt.

Das flexible Material ist vollständig mit der gerundeten Spanplattenkante verklebt. Die im Randbereich befindliche Klebefuge ist optisch mit bloßem Auge nicht zu erkennen. Die Oberfläche des angeklebten Materials ist äußerst glatt und weist keine Welligkeit auf.

**Tabelle 4**

| Verklebungsmaterial | Glättungsmasse | Temperatur Der Metallschiene | Kontaktzeit | Ergebnis |
|---|---|---|---|---|
| Eichefurnier, 0,6 mm | Reaktionsklebstoff 1 | 150 °C | 12 sec | Völlig glatte Oberfläche |
| Dekorative Papierfolie (75 g/m²) | Reaktionsklebstoff 2 | 150 °C | 4 sec | völlig glatte Oberfläche |
| Alkorcellfolie | Reaktionsklebstoff 2 | 150 °C | 4 sec | völlig glatte Oberfläche |
| Einschichtkante Igrafol (Fa. Bausch) | Reaktionsklebstoff 2 | 150 °C | 5 sec | völlig glatte Oberfläche |

## Patentansprüche

1. Verfahren zur Vergütung von Oberflächen von Holzwerkstoffen, insbesondere von schmalen Oberflächen, wobei ein formbares Beschichtungsmaterial auf die Oberfläche aufgebracht, das aufgebrachte Beschichtungsmaterial geglättet und/oder modelliert und in Kontakt mit mindestens einem beheizbaren Metallblock unter Beibehaltung der glatten Oberfläche mit Hilfe eines Treibmittels geschlossene Poren ausbildet, dadurch gekennzeichnet, daß das Treibmittel nur in den Holzwerkstoff eingebracht wurde.

2. Verfahren nach Anspruch 1, dadurch gekennzeichnet, daß das Beschichtungsmaterial reaktiv ist, insbesondere ein 1- oder 2-Komponenten-System auf der Basis von Polyurethan, Polyester, Poly(meth)acrylat oder Epoxid ist, und es in Kontakt mit mindestens einem beheizbaren Metallblock unter Beibehaltung der glatten Oberfläche aushärtet.

3. Verfahren nach Anspruch 1, dadurch gekennzeichnet, daß das Beschichtungsmaterial thermoplastisch bleibt.

4. Verfahren nach Anspruch 1, 2 oder 3, dadurch gekennzeichnet, daß der Metallblock Temperaturen im Bereich von 80 bis 180 °C hat.

5. Verfahren nach mindestens einem der Ansprüche 1 bis 4, dadurch gekennzeichnet, daß die Kontaktzeit mit dem Metallblock im Bereich von 2 bis 20 Sekunden liegt.

6. Verfahren nach mindestens einem der Ansprüche 1 bis 5, dadurch gekennzeichnet, daß beim Kontakt mit dem Metallblock gleichzeitig eine Dekorschicht aufgeklebt wird.

## Claims

1. A process for improving surfaces, especially narrow surfaces, of wood-based materials, wherein a formable coating material is applied to the surface, the coating material applied is smoothed and/or modelled and, in contact with a least one heatable metal block, forms closed pores with the smooth surface in tact on using a blowing agent, characterized in that the blowing agent is introduced only into the wood-based material.

2. A process as claimed in claim 1, characterized in that the coating material is reactive and, more particularly, is a one- or two-component system based on polyurethane, polyester, poly(meth)acrylate or epoxide and hardens in contact with at least one heatable metal block with the smooth surface in tact.

3. A process as claimed in claim 1, characterized in that the coating material remains thermoplastic.

4. A process as claimed in claim 1, 2 or 3, characterized in that the metal block has temperatures of 80 to 180°C.

5. A process as claimed in at least one of claims 1 to 4, characterized in that the contact time with the metal block is between 2 and 20 seconds.

6. A process as claimed in at least one of claims 1 to 5, characterized in that a decorative layer is adhesively applied during contact with the metal block.

## Revendications

1. Procédé de traitement de surfaces de matériaux en bois, en particulier de surfaces étroites, selon lequel on dépose un matériau de revêtement façonnable à la surface, on lisse et/ou on modèle le matériau de revêtement déposé et on le met en contact avec au moins un bloc métallique chauffable en maintenant fermés les pores de la surface lisse à l'aide d'un agent moussant,
caractérisé en ce que
l'agent moussant n'est introduit que dans le matériau en bois.

2. Procédé selon la revendication 1,
caractérisé en ce que
le matériau de revêtement est réactif, en particulier un système à un ou deux composants à base de polyuréthane, de polyester, de poly(méth)acrylate ou d'époxyde, et en ce qu'on le durcit au contact avec au moins un bloc métallique chauffable en maintenant la surface lisse.

3. Procédé selon la revendication 1,
caractérisé en ce que
le matériau de revêtement reste thermoplastique.

4. Procédé selon l'une quelconque des revendications 1 à 3,
caractérisé en ce que
le bloc métallique présente des températures de 80 à 180°C.

5. Procédé selon au moins l'une quelconque des revendications 1 à 4,
caractérisé en ce que
le temps de contact avec le bloc métallique est de 2 à 20 secondes.

6. Procédé selon au moins l'une quelconque des revendications 1 à 5,
caractérisé en ce que
lors du contact avec le bloc métallique on colle simultanément une couche de décoration.
